# EUROPEAN PATENT SPECIFICATION

(11) **EP 1 308 475 B1**
(45) Date of publication and mention of the grant of the patent: **31.01.2007**
(21) Application number: 02079116.6
(22) Date of filing: 07.10.2002
(51) Int. Cl.: C08J 9/00, C08L 23/06

(54) **Physically foamed fine cellular polyethylene foam**
Physikalisch geschäumter feinzelliger Polyethylenschaumstoff
Mousse de polyéthylène à cellules fines expansée physiquement

(30) Priority: 15.10.2001 NL 1019173
(43) Date of publication of application: 07.05.2003
(73) Proprietor: Saudi Basic Industries Corporation, Riyadh 11422 (SA)
(72) Inventor: de Vos, Roelof Franciscus Gerardus, 6241 EW Bunde (NL); Ruinaard, Hendrikus Pieter, 6133 XW Sittard (NL)
(74) Representative: Krijgsman, Willem

(56) References cited:
- EP-A- 0 377 323
- US-A- 3 491 032
- US-A- 4 214 054
- US-A- 5 369 135
- PATENT ABSTRACTS OF JAPAN vol. 012, no. 213 (C-505), 17 June 1988 (1988-06-17) & JP 63 012645 A (UBE IND LTD), 20 January 1988 (1988-01-20)

## Description

The invention relates to a process to obtain fine cellular polyethylene foam having a structure in which more than 95% of the cells have a cell diameter smaller than 150 micrometers by physical foaming of polyethylene in the presence of a nucleating agent which crystallises in the polymer melt before the actual foaming.

The physical foaming process is a continuous extrusion process in which the blowing gas, which forms cells in the polyethylene (PE) melt, is injected directly into the PE melt and homogeneously mixed and dissolved in the molten polyethylene. In order to keep the gas dissolved in the PE melt, a minimum pressure, which is dependent on the gas used and the prevailing melt temperature, is needed in the molten polyethylene. This pressure needs to be maintained through to the end of the outlet opening of the extruder head for example in order to prevent the gas from expanding prematurely from the melt in the extruder head to cause a rough, coarse cellular foam surface. On exiting from the outlet opening, the melt pressure decreases to the atmospheric pressure and the dissolved gas expands immediately from the melt. In this process cells are formed whose size depends on the quantity of gas, the number of nuclei (starting point for cell formation), the viscosity and elasticity of the polyethylene melt and the time available for cell growth. Cell growth ceases the moment the polyethylene melt reaches its crystallization temperature and the melt changes to the solid phase. In order to increase the viscosity in the melt and to shorten the cell growth time, the temperature in the polyethylene melt in the extruder and/or special melt coolers is reduced to just above the polyethylene crystallization temperature.

The size of the cells is on the one hand an equilibrium between the gas pressure in the cell and the resistance posed by viscosity to this gas pressure and on the other dependent on the number of nuclei (= nucleating agent particles) and hence on the number of cells that have formed.

Large cells are readily formed at low viscosity and high gas pressure. The viscosity level of the polyethylene melt is subject to limitations that are dependent on the heat of friction developing in the melt. This is because much heat of friction develops at a high viscosity, which heat subsequently needs to be dissipated since the melt temperature at the outlet opening needs to be brought near to the crystallization temperature.

A nucleating agent (solid particles that serve as a starting point for gas permeation out of the melt) is distributed homogeneously, because the number of cells that are formed depends on the number of nuclei present in the melt. The higher the number of nuclei, the higher the number of cells among which the gas is distributed, so that, for an equal gas quantity, this larger number of cells will have a smaller cell size.

In foams produced by the physical foaming process, the nature and the particle size of the nucleating agent place a crucial role in respect of the cell size.

In "Factors effecting foam cel nucleation in direct gassed foam extrusion" by Thomas Pontiff (Foamplas 1997; pages 251-261) a description is given of a process for physical foaming of polyethylene in the presence of a nucleating agent and using an inorganic compound such as for example talc or sodium bicarbonate as nucleating agent. The drawback of this process is that a minimum cell diameter of only 340 micrometers is obtained.

Polyethylene may also be foamed by chemical foaming with the blowing gas, from which the cells evolve, being formed by decomposition of a chemical blowing agent such as azodicarbonamide (ADC) and sodium bicarbonate (SBC). In the decomposition process, ADC mainly gives off nitrogen (N₂) and SBC mainly gives off carbon dioxide (CO₂). In the temperature range from 150 to 200°C (across which ADC and SBC decompose) both gases have a very high gas pressure and are therefore extremely difficult to keep dissolved in a molten polyethylene at these temperatures in the amount needed for a high degree of foaming. Moreover, in the said temperature range polyethylene has a relatively low viscosity, as a result of which extremely large cells would be formed.

In the chemical foaming process, in order to overcome the problems of on the one hand the high gas pressure and on the other the low viscosity, the polyethylene is crosslinked before the blowing agent decomposes, so before the blowing gas is released. Customary techniques for polyethylene in the chemical foaming process are crosslinking with the aid of peroxides or by electron radiation. Both techniques result in crosslinks between the polyethylene chains so that the viscosity increases very strongly and the crosslinked polyethylene almost ceases to flow as a melt but is stretchable as a rubber. This results in an extremely high opposing force for cell growth. This, in combination with an extremely small particle size of the blowing agent, allowing very many cells to develop simultaneously, results in a very fine cellular foam with a cell diameter between 1 and 100 micrometers being possible.

Extruding polyethylene with the required amount of blowing agent and other auxiliary materials, crosslinking and foaming the crosslinked polyethylene are 3 separate steps in the chemical foaming process that are not customarily carried out in a single operation but independently of one another. This requires much additional equipment and additional handling and storage of the intermediate products. This, in combination with the expensive blowing agents and auxiliary materials, renders the chemical foaming process a costly process in comparison with the physical foaming process, in which relatively cheap blowing gases and relatively simple equipment are used.

The object of the invention is to provide a non-crosslinked, physically blown foam whose fine cellular structure is similar to that of crosslinked, chemically blown foam. The aim is to provide a physically blown polyethylene foam having a highly regular, fine cellular foam structure with the cells having a cell diameter smaller than 340 micrometers and preferably smaller than 150 micrometers.

This object is achieved by applying as the nucleating agent an organic compound which, on changing to the solid phase, forms crystals and which in its melt phase is soluble in the molten polyethylene.

The invention is characterised by a process to obtain fine cellular polyethylene foam having a structure in which more than 95 % of the cells have a cell diameter smaller than 150 micrometers by physical foaming of polyethylene in the presence of a nucleating agent, wherein the nucleating agent is an organic compound which, on changing to the solid phase, forms crystals and which in its melt phase is soluble in the molten polyethylene, wherein the crystallization temperature of the nucleating agent is higher than the crystallization temperature of polyethylene and wherein the foam is a continuously extruded physically foamed fine cellular polyethylene foam.

In this way, continuously extruded physically blown polyethylene foam having a highly regular, fine cellular or micro cellular foam structure is obtained in which more than 95% of the cells have a cell diameter smaller than 150 micrometers.

The obtained fine cellular foam may consist essentially of closed cells (with at least 90 % of the cells being closed). However, the obtained foam may also be partly open cell foam with an open cell content of for example 10%-60% of all cells.

According to a further preferred embodiment of the invention the polyethylene foam has a foam structure in which more than 80% of the cells have a cell diameter smaller than 100 micrometers.

For proper nucleating performance the crystallization temperature of the nucleating agent must be higher than that of polyethylene so that, as the polyethylene melt cools down, the nucleating agent crystallizes sooner than polyethylene.

In a preferred embodiment of the invention, the difference between the crystallization temperatures of polyethylene and the nucleating agent is greater than 10°C.

As a result, the nucleating agent will have crystallized before the polyethylene changes to the solid phase at its crystallization temperature.

In another preferred embodiment of the invention, the difference between the crystallization temperatures of polyethylene and the nucleating agent is greater than 20°C.

The crystallization temperature can be determined by DSC measurement (ASTM D3417-97).

In order for the desired aim to be achieved the difference between nucleating agent's melting temperature and crystallization temperature must be as small as possible. It has been found that the temperature range in which crystallization occurs becomes narrower with a decreasing difference between the melting temperature and crystallization temperature. A narrower crystallization temperature range leads to a sharper and more regular crystallization transition and to a more regular and more fine cellular foam. Consequently, the widths of the melting peak and the crystallization peaks must also be as narrow as possible, preferably less than 5°C.

In a preferred embodiment of the invention, the difference between the melting temperature and the crystallization temperature of the nucleating agent is less than 20°C.

In another preferred embodiment of the invention the difference between the melting temperature and the crystallization temperature of the nucleating agent is less than 10°C.

Preferably the nucleating agent is an amide, an amine and/or an ester of a saturated or unsaturated aliphatic (C₁₀-C₃₄) carboxylic acid.

Examples of suitable amides include fatty acid (bis)amides such as for example stearamide, caproamide, caprylamide, undecylamide, lauramide, myristamide, palmitamide, behenamide and arachidamide, hydroxystearamides and alkylenediyl-bis-alkanamides, preferably (C₂-C₃₂) alkylenediyl-bis-(C₂-C₃₂) alkanamides, such as for example ethylene bistearamide, butylene bistearamide, hexamethylene bistearamide, and/or ethylene bibehenamide.

Suitable amines are for instance (C₂-C₁₈) alkylene diamines such as for example ethylene biscaproamine and hexamethylene biscaproamine .

Preferred esters of a saturated or unsaturated aliphatic (C₁₀-C₃₄) carboxylic acid are the esters of an aliphatic (C₁₆-C₂₄) carboxylic acid.

The nucleating agent is applied in an amount of between 0.1 and 4.0 wt.% relative to polyethylene. This amount preferably is between 0.5 and 1 wt.%.

The polyethylene may be any polymer containing more than 50 wt.% ethylene units such as for example ethylene homo polymers and copolymers such as for example low density polyethylene (LDPE), high density polyethylene (HDPE), linear low density polyethylene (LLDPE) (C₄, C₆ and C₈ copolymers), ethylene vinyl acetate (EVA), ethylene methacrylic acid (EMA) and/or polyethylene obtained with a metallocene catalyst (mPE. Preferably, mPE has a density in the range between 882 and 915 kg/m³

The selection of the polymer depends in part on the desired application and on the desired foam properties.

The polyethylene foam according to the invention has a density of between 10 and 100 kg/m³ and more, preferably between 10 and 50 kg/m³.

Besides the polymer and the nucleating agent, the composition to be foamed must contain at least a blowing agent and a cell stabilizer. The composition may additionally contain other additives such as for example flame retardants, pigments, lubricants, antistatic agents, processing stabilizers, chemical blowing agents and/or UV stabilizers.

Suitable physical blowing agents include for example isobutane, CO₂, pentane, butane, nitrogen and/or fluorohydrocarbons.

Preferably, the physical blowing agent is isobutane or CO₂.

Suitable cell stabilizers include for example glycerol monostearate (GMS), mixtures of GMS and glycerol monopalmitate (GMP) and/or amides such as for example stearyl stearamide and/or stearamide.

Preferably, the cell stabiliser is GMS.

The selection of the foaming conditions in the physical foaming process used depend in part on the polyethylene used.

The organic nucleating agent is added as a solid crystalline compound and, on melting in the extruder, becomes liquid, whereafter it is mixed with the molten polymer. Next, the liquid blowing gas is injected and homogeneously mixed with the PE melt . Cooling takes place in the second section of the mixing extruder or in a special cooling extruder (tandem extrusion) and/or in a special melt cooler (with or without mixing sections) wherein the organic nucleating agent crystallizes on reaching the crystallization temperature.

As is evident from page 316 of the publication "ethylenediyl-bis-alkanamides: differential scanning calorimetry studies" (JAOCS, vol 73, No. 3 (1996)), these amides, which according to the present invention are suitable for use as a nucleating agent, consist of long, straight molecules in crystalline condition. The crystals are formed by the hydrogen bond between the carbonyl oxygen atoms and the hydrogen atoms bonded to the nitrogen atoms and by the Van der Waals forces between the alkyl chains.

The composition is extruded at a temperature just above the crystallization temperature of the polyethylene. The exit temperature from the extrusion opening usually is maximum 10°C and preferably maximum 5°C higher than the crystallization temperature. The temperature at which the viscosity increase begins due to the crystallization of polyethylene corresponds with the crystallization onset temperature from a DSC curve. In order to achieve on the one hand the maximum viscosity and hence the desired fine cellular structure and, on the other, to prevent the melt from "freezing" (crystallizing too rapidly) in the outlet, the melt temperature is maintained at about 5°C and preferably about 2°C above the crystallization onset temperature so as to obtain a fine cellular foam with a cell size according to the invention.The cell diameter can be determined with for example a light microscope with image projection or with a Scanning Electron Microscope (SEM).

The foam obtained by the process of the invention has the advantage that it exhibits a much smoother surface structure than a foam obtained by a physical foaming process using an inorganic nucleating agent. Consequently, this foam can compete with the crosslinked foam obtained by a more costly chemical foaming process in terms of for example surface smoothness.

The fine cellular foam of the invention may be used as for example foam sheeting for floor insulation, as foam section for protecting glass plates, as foamed heat insulation tubing for copper hot-water pipes, as foamed packaging film and as decoration.

EP-A-0377323 discloses a batch process for preparing an ionomeric closed cell microcellular foam comprising the steps of permeating a copolymer of at least one α-olefin and at least one α,β-monoethylenically unsaturated carboxylic acid, by pressurizing using an inert gas in the presence of a blowing agent and ammonia for an incubation time sufficient to effect a substantial diffusion of the inert gas, the blowing agent and the ammonia throughout the copolymer, the pressurizing being sufficient to maintain a pressure from 1.4 MPa to 20 MPa and thereafter heating the permeated copolymer in a field of electromagnetic radiation of from 0.1 megahertz (MHz) to 200 MHz to prepare a closed cell microcellular foam wherein the foam contains cells with a diameter of less than 10 µm. EP-A-377323 does not disclose a nucleating agent and does not disclose that the nucleating agent is an organic compound which, on changing to the solid phase, forms crystals and which in its melt phase is soluble in the molten polyethylene and wherein the crystallization temperature of the nucleating agent is higher than the crystallization temperature of polyethylene. EP-A-377323 does not disclose the preparation of continuously extruded physically foamed fine cellular polyethylene foam. EP-A-377323 discloses the preparation of an ionomeric microcellular foam sheet and is directed to a batch process.

US-A-5369135 discloses a microcellular foamed polymer composition comprising a polymer matrix material selected from a group of polymers (the polymer may be for example polyethylene) and a plurality of closed cells, located within a polymeric matrix material, comprising a gas enclosed by a shell comprising a second phase solid polymeric material which has a transition temperature below the transition temperature of said polymeric matrix material, said second phase polymeric material being a nucleating agent for said plurality of closed cells. US-A-5369135 is directed to a blend of two polymers because the composition includes the matrix material and second phase polymeric material. The second phase polymeric material is not soluble in the molten polymer. The second phase solid polymeric material has a transition temperature below the transition temperature. US-A-5369135 does not disclose a continuous process. US-A-5369135 does not disclose a nucleating agent which is an organic compound which, on changing to the solid phase, forms crystals and which in its melt phase is soluble in the molten polyethylene and wherein the crystallization temperature of the nucleating agent is higher than the crystallization temperature of polyethylene. US-A-5369135 does not disclose continuously extruded physically foamed fine cellular polyethylene foam having a structure in which more than 95 % of the cells have a cell diameter smaller than 150 micrometers.

US-A-4214054 discloses that a thermoplastic synthetic resin such as polyethylene or ethylene-vinyl acetate copolymer resin containing 0.1 to 10 wt. % of a specific additive selected from specific classes of compounds, namely saturated higher fatty acid amides, saturated higher aliphatic amines and complete esters of saturated higher fatty acids is found to be very suitable for production of expanded articles and can be easily formed into expanded articles with little shrinkage after expansion, free from creases on the surface or cracks on the cell walls, and having excellent characteristics such as good closed cellular characteristic, higher compressive strength and low density. The specific additive selected from saturated higher fatty acid amides, saturated higher aliphatic amines and complete esters of saturated higher fatty acids is a component which imparts little shrinkage. The resin composition contains in addition to the component which imparts little shrinkage further nucleators to obtain proper nucleating performance. In particular, it is preferably to use a small amount (not more than 1% by weight) of nucleators such as talc or a fatty acid metal salt.

The invention will now be elucidated by means of the following non-restrictive examples.

### Examples

### Example I

A composition consisting of 95.2 wt.% LDPE (DSM type Stamylan LD 2102TX00^{™} with melt index of 1.9 dg/min and density of 921 kg/m³), 2 wt % glycerol monostearate (GMS), 2 wt % stearamide (SA) and 0.8 wt.% ethylene bistearamide (EBS) was extruded in a Schwabentan single-screw extruder followed by three Sulzer static mixers and an extrusion head with an outlet opening of 4 x 1 mm.

The extruder throughput was 1.5 kg/hour, the injected quantity of isobutane was 3.5 ml/min, the temperature settings of the extruder zones were 150°C, 240°C, 250°C, 250°C and 250°C, the temperature settings of the three Sulzer mixers were 150°C, 100°C, 100°C and the temperature setting of the extruder head was 102°C.

A fine cellular foamed strip was obtained having a foam density of 35 kg/m³, a width of 17.5 mm and a thickness of 6.5 mm.

The SEM photograph (Attachment I) shows the obtained foam with an average cell diameter of 100 micrometers and a regular structure of the cell diameter between 75 and 125 micrometers.

### Example II

A composition consisting of 96 wt.% mPE (DEXPlastomers Exact 8203^{™} with melt index of 3.0 dg/min and density of 882 kg/m³), 2 wt % glycerol monostearate (GMS), 2 wt % stearamide (SA) was extruded in a Schwabentan single-screw extruder followed by three Sulzer static mixers and an extrusion head with an outlet opening of 4 x 1 mm.

The extruder throughput was 2.0 kg/hour, the injected quantity of isobutane was 7.0 ml/min, the temperature settings of the extruder zones were 150°C, 250°C, 250°C, 250°C and 250°C, the temperature settings of the three Sulzer mixers were 135°C, 65°C, 60°C and the temperature setting of the extruder head was 65°C.

A fine cellular foamed strip was obtained having a foam density of 35 kg/m³, a width of 19.0 mm and a thickness of 7.0 mm . The average cell diameter was 90 micrometers.

### Example III

A composition consisting of 95 wt.% mPE (DEXPlastomers Exact 0203^{™} with melt index of 3.0 dg/min and density of 902 kg/m³), 2 wt % glycerol monostearate (GMS), 2 wt % stearamide (SA) and 1 wt.% ethylene bistearamide (EBS) was extruded in a Schwabentan single-screw extruder followed by three Sulzer static mixers and an extrusion head with an outlet opening of 4 x 1 mm.

The extruder throughput was 1.5 kg/hour, the injected quantity of isobutane was 7.0 ml/min, the temperature settings of the extruder were 150°C, 250°C, 250°C, 250°C and 250°C, the temperature settings of the three Sulzer mixers were 137°C, 84°C, 78°C and the temperature setting of the extruder head was 85°C.

A fine cellular foamed strip was obtained having a foam density of 28 kg/m³, a width of 15.0 mm and a thickness of 5.0 mm . The average cell diameter was 80 micrometers.

### Comparative example A

Example I was repeated using as the composition a mixture of 95.2 wt.% LDPE (DSM type Stamylan LD 2102TX00^{™} with melt index of 1.9 dg/min and density of 921 kg/m³), 2 wt.% glycerol monostearate (GMS), 2 wt.% stearamide (SA) and 0.8% talc.

A coarsely cellular foamed strip was obtained having a foam density of 39 kg/m³, a width of 21.1 mm and a thickness of 9.5 mm.

The SEM photograph (Attachment II) shows the obtained foam with average cell diameter of 2.2 mm.

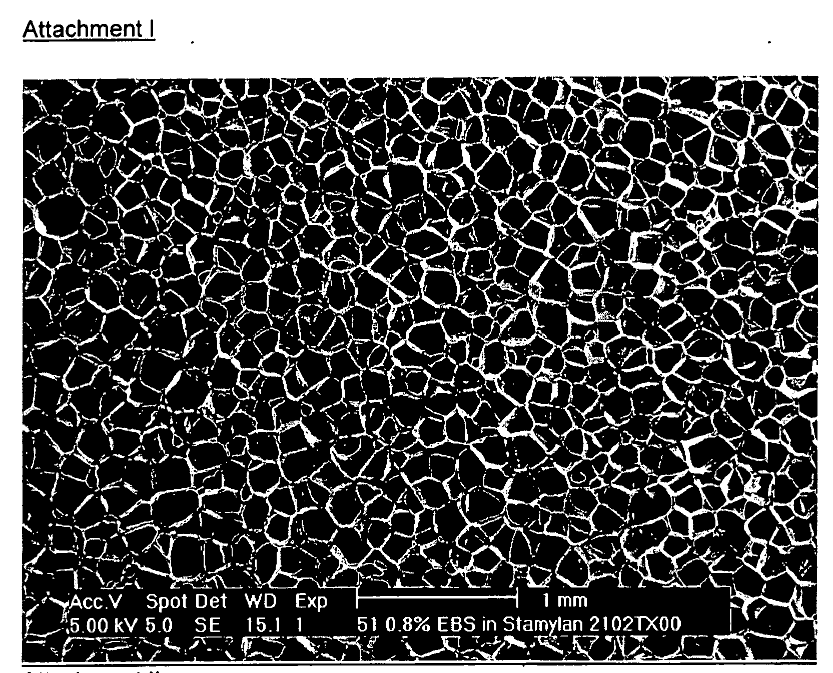

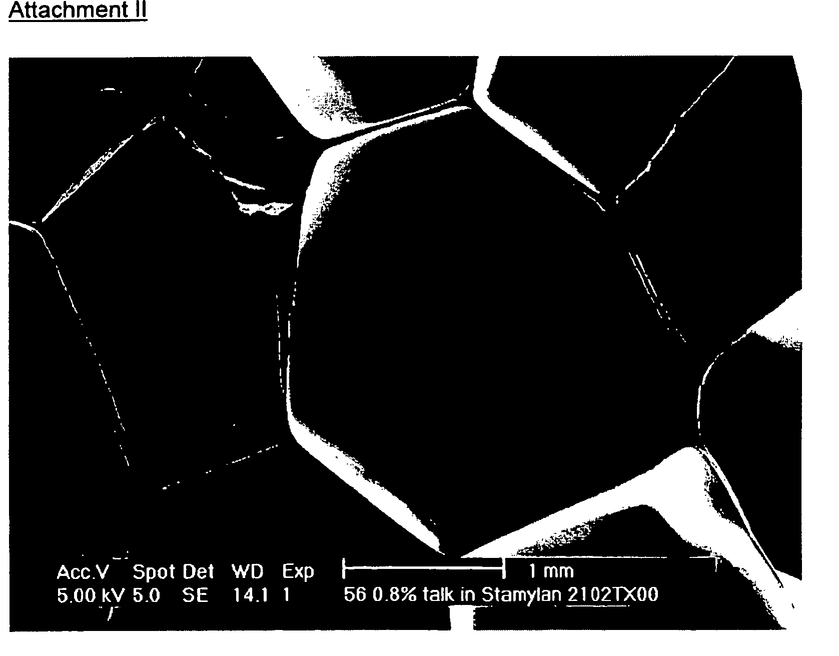

## Claims

1. A process to obtain fine cellular polyethylene foam having a structure in which more than 95 % of the cells have a cell diameter smaller than 150 micrometers by physical foaming of polyethylene in the presence of a nucleating agent, wherein the nucleating agent is an organic compound which, on changing to the solid phase, forms crystals and which in its melt phase is soluble in the molten polyethylene, wherein the crystallization temperature of the nucleating agent is higher than the crystallization temperature of polyethylene and wherein the foam is a continuously extruded physically foamed fine cellular polyethylene foam.

2. A process according to Claim 1 **characterized in that** the difference between the crystallization temperatures of polyethylene and the nucleating agent is higher than 10°C.

3. A process according to any one of Claims 1-2 **characterized in that** the polyethylene foam has a density of between 10 and 100 kg/m³.

4. A process according to any one of Claims 1-3 **characterized in that** the polyethylene foam has a foam structure in which more than 80% of the cells have a cell diameter smaller than 100 micrometers

5. A process according to any one of Claims 1-4 **characterized in that** the difference between the crystallization temperatures of polyethylene and the nucleating agent is greater than 20°C.

6. A process according to any one of Claims 1-5 **characterized in that** the difference between the melting temperature and the crystallization temperature of the nucleating agent is less than 20°C.

7. A process according to any one of Claims 1-6 **characterized in that** the difference between the melting temperature and the crystallization temperature of the nucleating agent is less than 10°C.

8. A process according to any one of Claims 1-7 **characterized in that** the nucleating agent is an amide, an amine and/or an ester of a saturated or unsaturated aliphatic (C₁₀-C₃₄) carboxylic acid.

9. A process according to any one of Claims 1-8 **characterized in that** the nucleating agent is stearamide, behenamide, ethylene bistearamide, ethylene bibehenamide, butylene bistearamide, hexamethylene bistearamide ethylene biscaproamine and/or hexamethylene biscaproamin.

## Patentansprüche

1. Verfahren für den Erhalt von feinzelligem Polyethylenschaumstoff mit einer Struktur, in welcher mehr als 95 % der Zellen einen Zelldurchmesser von kleiner als 150 Mikrometer haben, durch physikalisches (Auf)Schäumen von Polyethylen in Gegenwart eines Nukleierungsmittels, wobei das Nukleierungsmittel eine organische Verbindung ist, welche nach einer Veränderung zu der festen Phase Kristalle bildet und welche in ihrer Schmelzphase in dem geschmolzenen Polyethylen löslich ist, wobei die Kristallisationstemperatur des Nukleierungsmittels höher als die Kristallisationstemperatur von Polyethylen ist und wobei der Schaumstoff ein kontinuierlich extrudierter, physikalisch geschäumter, feinzelliger Polyethylenschaumstoff ist.

2. Verfahren nach Anspruch 1, **dadurch gekennzeichnet, dass** der Unterschied zwischen den Kristallisationstemperaturen von Polyethylen und dem Nukleierungsmittel höher als 10°C ist.

3. Verfahren nach mindestens einem der Ansprüche 1 - 2, **dadurch gekennzeichnet, dass** der Polyethylenschaum-stoff eine Dichte zwischen 10 und 100 kg/m³ besitzt.

4. Verfahren nach mindestens einem der Ansprüche 1 - 3, **dadurch gekennzeichnet, dass** der Polyethylenschaumstoff eine Schaumstoffstruktur besitzt, in welcher mehr als 80 % der Zellen einen Zelldurchmesser von kleiner als 100 Mikrometer aufweisen.

5. Verfahren nach mindestens einem der Ansprüche 1 - 4, **dadurch gekennzeichnet, dass** der Unterschied zwischen den Kristallisationstemperaturen von Polyethylen und dem Nukleierungsmittel größer als 20°C ist.

6. Verfahren nach mindestens einem der Ansprüche 1 - 5, **dadurch gekennzeichnet, dass** der Unterschied zwischen der Schmelztemperatur und der Kristallisationstemperatur des Nukleierungsmittels weniger als 20°C ist.

7. Verfahren nach mindestens einem der Ansprüche 1 - 6, **dadurch gekennzeichnet, dass** der Unterschied zwischen der Schmelztemperatur und der Kristallisationstemperatur des Nukleierungsmittels weniger als 10°C ist.

8. Verfahren nach mindestens einem der Ansprüche 1 - 7, **dadurch gekennzeichnet, dass** das Nukleierungsmittel ein Amid, ein Amin und/oder ein Ester einer gesättigten oder ungesättigten aliphatischen (C₁₀-C₃₄-) Carbonsäure ist.

9. Verfahren nach mindestens einem der Ansprüche 1 - 8, **dadurch gekennzeichnet, dass** das Nukleierungsmittel Stearamid, Behenamid, Ethylenbistearamid, Ethylenbibehenamid, Butylenbistearamid, Hexamethylenbistearamidethylenbiscaproamin und/oder Hexamethylenbiscaproamin ist.

## Revendications

1. Procédé destiné à l'obtention d'une mousse cellulaire fine de polyéthylène présentant une structure dans laquelle plus de 95 % des cellules ont un diamètre inférieur à 150 micromètres, par moussage physique du polyéthylène en présence d'un agent de nucléation, ledit agent de nucléation étant un composé organique qui, en se solidifiant, forme des cristaux et qui, en phase fondue, est soluble dans le polyéthylène fondu, la température de cristallisation de l'agent de nucléation étant supérieure à la température de cristallisation du polyéthylène, et où la mousse est une mousse cellulaire fine de polyéthylène obtenue par moussage physique et extrudée en continu.

2. Procédé selon la Revendication 1 **caractérisé en ce que** la différence entre les températures de cristallisation du polyéthylène et de l'agent de nucléation est supérieure à 10 °C.

3. Procédé selon l'une quelconque des Revendications 1 et 2 **caractérisé en ce que** la mousse de polyéthylène a une densité comprise entre 10 et 100 kg/m³.

4. Procédé selon l'une quelconque des Revendications 1 à 3 **caractérisé en ce que** la mousse de polyéthylène a une structure de mousse dans laquelle plus de 80 % des cellules présentent un diamètre inférieur à 100 micromètres.

5. Procédé selon l'une quelconque des Revendications 1 à 4 **caractérisé en ce que** la différence entre les températures de cristallisation du polyéthylène et de l'agent de nucléation est supérieure à 20 °C.

6. Procédé selon l'une quelconque des Revendications 1 à 5 **caractérisé en ce que** la différence entre la température de fusion et la température de cristallisation de l'agent de nucléation est inférieure à 20 °C.

7. Procédé selon l'une quelconque des Revendications 1 à 6 **caractérisé en ce que** la différence entre la température de fusion et la température de cristallisation de l'agent de nucléation est inférieure à 10 °C.

8. Procédé selon l'une quelconque des Revendications 1 à 7 **caractérisé en ce que** l'agent de nucléation est un amide, une amine et/ou un ester d'un acide carboxylique aliphatique (C₁₀-C₃₄) saturé ou insaturé.

9. Procédé selon l'une quelconque des Revendications 1 à 8 **caractérisé en ce que** l'agent de nucléation est le stéaramide, le béhénamide, l'éthylène-bistéaramide l'éthylène-bibéhénamide, le butylène-bistéaramide, l'héxaméthylène-bistéaramide, l'éthylène-biscaproamine et/ou l'héxaméthylène-biscaproamine.
